# EUROPEAN PATENT APPLICATION

(11) **EP 3 327 585 A1**
(43) Date of publication of application: **30.05.2018**
(21) Application number: 17000783.5
(22) Date of filing: 05.05.2017
(51) Int. Cl.: G06F 17/30

(54) **DYNAMIC MICRO CHART**

(30) Priority: 29.11.2016 US 201615363697
(71) Applicant: SAP SE, 69190 Walldorf (DE)
(72) Inventor: Schneider, Judith, 69190 Walldorf (DE); Monnier, Vincent, 69190 Walldorf (DE); Denis, Sylvie, 69190 Walldorf (DE); Pukalskyi, Bohdan, 69190 Walldorf (DE); Rooke, Oliver, 69190 Walldorf (DE)
(74) Representative: Müller-Boré & Partner Patentanwälte PartG mbB

(57) **Abstract**

Disclosed herein are system, method, and computer program product embodiments for generating and adjusting graphs. An embodiment operates by a computer implemented method that includes evaluating, by at least one processor, data to be displayed on a chart, one or more parameters associated with the chart, and one or more parameters associated with a device on which the chart is to be displayed. The method further includes determining a design for the chart based on the evaluating. The design of the chart includes at least one of a number of data points on the chart, a number of focus points on the chart, a size of the chart, a color of the data points, a color of the focus points, an area associated with the chart, and a color of the area. The method further includes generating the chart based on the determined design and graphically displaying the chart.

## Description

### BACKGROUND

The advancement of analytics software applications now allows users to quickly analyze large sets of data to discover and understand historical patterns in order to gauge the effectiveness of current business strategies and to appropriately adjust these strategies to improve business performance in the future. Graphs and charts are one way to graphically display the sets of data to the users. These graphs and charts are displayed on a number of different devices with different user interfaces and different requirements and parameters.

### BRIEF DESCRIPTION OF THE DRAWINGS

The accompanying drawings are incorporated herein and form a part of the specification.
FIG. 1 is an illustration of an exemplary distributed system, according to some embodiments.
FIG. 2 is an architecture diagram of an exemplary device for displaying graphs, according to some embodiments.
FIGs. 3A-3F illustrate exemplary charts, according to some embodiments.
FIGs. 4A and 4B illustrate exemplary charts responsive to changes in parameters, according to some embodiments.
FIGs. 5A-5E illustrate exemplary charts responsive to different parameters, according to some embodiments.
FIGs. 6A-6F illustrate other exemplary charts, according to some embodiments.
FIG. 7 is a flowchart for a method, according to some embodiments.
FIG. 8 is a flowchart for a method for adapting a chart based on user manipulation, according to some embodiments.
FIG. 9 is an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof, for improving generating and dynamically adjusting graphs.

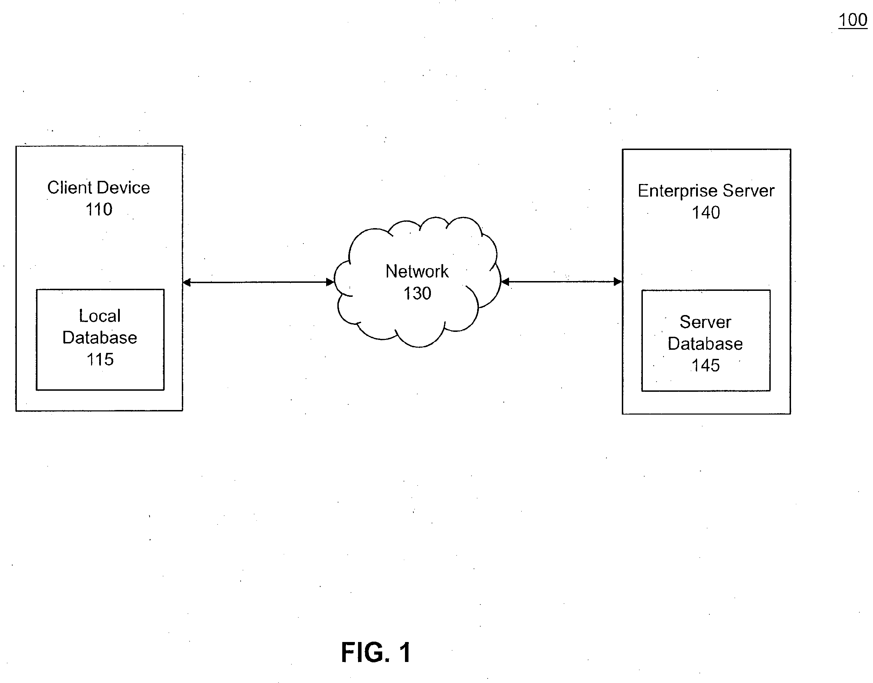

FIG. 1 is an illustration of an exemplary distributed system 100 in which embodiments described herein can be implemented. Distributed system 100 includes a client device 110 that is communicatively coupled to enterprise server 140 through network 130. Client device 110 can be any type of computing device having one or more processors, a user input (for example, a touch-screen, mouse, QWERTY keyboard, microphone, or a T9 keyboard), and a communications infrastructure capable of receiving and transmitting data over a network. For example, computing device 110 can include, but is not limited to, a mobile phone or other mobile device, a personal digital assistant (PDA), a computer, a cluster of computers, a set-top box, or other similar type of device capable of processing instructions and receiving and transmitting data to and from humans and other computing devices. Similarly, enterprise server 140 can be any type of server or computing device capable of serving data to client device 110. Client device 110 can include a web application. The web application can be used by, for example, a chart generator (discussed in more detail below) to create charts, graphs, etc. to be displayed as a Hypertext Markup Language (HTML) element structure such that a web browser would be able to render the chart. However, it is noted that the embodiments of this disclosure are not limited to this example.

Network 130 can be any network or combination of networks that can carry data communication. Such network can include, but is not limited to, a wired (e.g., Ethernet) or a wireless (e.g., Wi-Fi, 3G, 4G, 5G, etc.) network. In addition, network 130 can include, but is not limited to, a local area network, medium area network, and/or wide area network such as the Internet. Network 130 can support protocols and technology including, but not limited to, Internet or World Wide Web protocols and/or services. Intermediate network routers, gateways, or servers may be provided between components of distributed system 100 depending upon a particular application or environment.

In an embodiment, enterprise server 140 includes a server database 145. Server database 145 may store any type of data, including, but not limited to, data to be used for analytics applications, that is accessible by enterprise server 140. Although only server database 145 is shown, additional databases may be used as necessary. In an embodiment, local database 115 is used to store data accessible by client device 110. For example, local database 115 may be implemented using any type of recording medium coupled to an integrated circuit that controls access to the recording medium. The recording medium can be, for example and without limitation, a semiconductor memory, a hard disk, or other similar type of memory or storage device. Moreover, local database 115 may be integrated within client device 110 or a stand-alone device communicatively coupled to client device 110 via a direct connection. For example, local database 115 may include an internal memory device of client device 110, a compact flash card, a secure digital (SD) flash memory card, or other similar type of memory device.

In an example, client device 110 may suffer from limitations such as reduced memory capabilities when compared to enterprise server 140. Therefore, data stored at local database 115 includes, but is not limited to, a subset of data found at server database 145. For example, local database 115 and server database 145 may each be relational databases. In an embodiment, the data stored at local database 115 can be synchronized with server database 145 over network 130. An example by which client device 110 can interact with enterprise server 140 to synchronize data is described in, but not limited to, commonly owned U.S. patent application Ser. No. 11/882,749, filed Aug. 3, 2007, titled "Unwired Enterprise Platform", which is herein incorporated by reference in its entirety. Additional means by which data may be provided to local database 115 would be apparent to a person skilled in the relevant art given this description.

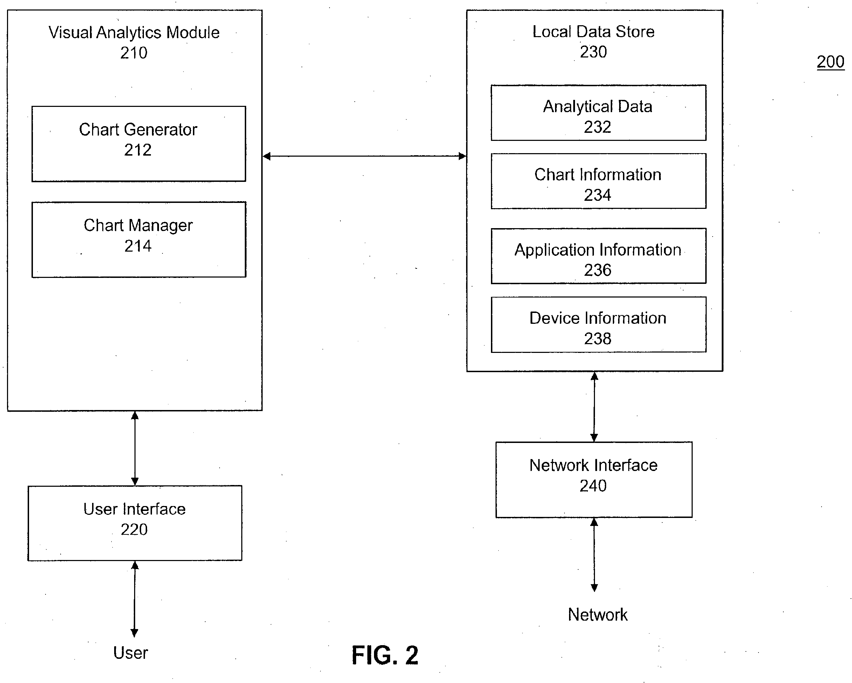

FIG. 2 is an architecture diagram of an exemplary device 200 for displaying graphs, for example charts, according to some embodiments.

Device 200 can include a visual analytics module 210, which can include a chart generator 212 and a chart manager 214. Device 200 can further include a local data store 230, which can include analytical data 232, chart information 234, application information 236, and device information 238. Device 200 can also include a user interface 220 and a network interface 240.

According to some embodiments, visual analytics module 210 is communicatively coupled to local data store 230, via, for example, an internal data bus of device 200. In an embodiment, local data store 230 can be a lightweight database (e.g., local database 115 of FIG. 1) holding some subset of data from an enterprise server database (e.g., enterprise database 145 of FIG. 1). It is noted that although data store 230 is illustrated as a local data store, the embodiments of this disclosure are not limited to a local data store. Data store 230 can be a local data store, a server database (e.g., server database 145), or a combination thereof. Visual analytics module 210 can be configured to visualize expressions and/or analytical information in graphical views, such as charts, graphs, etc. The graphical views are referred to herein as charts, but it is noted that the embodiments of this disclosure can include any kind of charts and graphs such as, but not limited to, line charts, area charts, bullet charts, column charts, ball chart, delta charts, radial charts, etc.

According to some embodiments, device 200 is configured to expressions and/or analytical information in charts, where the charts are embedded in applications. Additionally or alternatively, device 200 is configured to visualize charts that are responsive to one or more parameters such as, but not limited to, the size of the device the chart is being displayed on, other device information, the size of the screen on which the chart is being displayed on, the type and amount of information to be visualized in the chart, the chart information, the application information in which the chart is embedded, etc. Further, device 200 is configured to dynamically change the charts in response to changes made to the one or more parameters mentioned above.

In an embodiment, local data store 230 includes analytical data 232. Analytical data 232 can include the analytical information and data that is to be visualized in the chart. For example, analytical data 232 can include expressions, which may include, but are not limited to, mathematical expressions as well as prediction and statistical expressions. The aforementioned expressions are presented by way of example and not limitation. A person skilled in the relevant art given this description will appreciate that other types of expressions may be implemented as necessary. Analytical data 232 can include expression data, which may include, but is not limited to, persistent analytics application data and/or aggregated historical analytics application data, such as, for example, aggregated key performance indicators ("KPI"). In an embodiment, device 200 can use network interface 240 to receive and update analytical data, expressions, and/or expression data from an enterprise server over a network, as described above. In an example, such expressions can be predefined by an analytics application developer, and may be initially stored at an enterprise server and later retrieved via network interface 240 and stored at local data store 230.

Local data store 230 can also include chart information 234. According to some example, chart information 230 can include information and parameters associated with the chart to be visualized by device 200. As a non-limiting example, chart information 234 can include information and parameters such as whether a chart is to display the trend, data points, or a combination thereof. Additionally or alternatively, chart information 234 can include information on whether one or more focus points to be displayed on the graph and if so, which points are to be considered focus points. As another example, chart information 234 can include information on whether the data points and/or focus points are to be displayed with neutral colors or semantic colors (e.g., colors that attribute positive or negative meaning to the points.) In addition or in alternate, local data store 230 can include information on whether a threshold (such as zero axis) to be shown with the chart. As another example, chart information 234 can include information on whether areas below or above the threshold to be displayed with neutral color or semantic colors (e.g., colors that attribute positive or negative meaning to the areas.) Chart information 234 can further include parameters regarding the size of the chart, a relation between the size of the chart and the device and/or display on which the chart is to be displayed, the fonts, sizes, colors of labels, titles, and description on the chart, etc. Although these exemplary parameters are provided, it is noted that the embodiments of this disclosure are not limited to these examples.

Local data store 230 can also include application information 236. As discussed above, the chart to be displayed by device 200 can be embedded in an application, according to some embodiments. In these embodiments, instead of a dedicated application for displaying information, the chart is embedded in the application for which the chart is being displayed. Application information 236 can include information associated with the application for which the chart is being displayed. Application information can include, for example, the location of the chart on the application, how the application retrieves data and updates the information for the chart (e.g., the analytical data), application's parameters and/or requirements for the chart, etc. Although these exemplary parameters are provided, it is noted that the embodiments of this disclosure are not limited to these examples.

Local data store 230 can also include device information 238. Device information 238 can include information and parameters associated with device 200. For example, device information 238 can include information regarding the size of device 200, information regarding the display of device 200, information regarding input and output devices of device 200, etc. Although these exemplary information and data are provided, it is noted that the embodiments of this disclosure are not limited to these examples.

Device 200 can use the information stored in local data store 230 (and/or information retrieved using network interface 240 from the network) to display a chart using visual analytics module 210. According to some embodiments, visual analytics module 210 can include chart generator 212 and chart manager 214. In some embodiments, chart generator 212 is configured to generate and display the chart on a display of, for example, device 200 based on the information chart generator 212 receives from chart manager 214. In an embodiment, chart generator 212 analyzes the information received from chart manager 214 in order to generate graphical visualization. In some examples, chart generator 212 is configured to create the chart to be displayed as a Hypertext Markup Language (HTML) element structure such that a web browser would be able to render the chart. In a non-limiting example, visual analytics module 210 can be developed as an application programming interface (API). However, it is noted that the embodiments of this disclosure are not limited to this example.

According to some embodiments, chart manager 214 is configured to retrieve analytical data, chart information, application information, and device information from local data store 230 and can manage the chart to be generated and displayed by chart generator 212. Additionally or alternatively, chart manager 214 can receive information and/or parameters from a user and/or a developer through user interface 220. Chart manager 214 with chart generator 212 can use the user information in creating and displaying the chart. User interface 220 can include any interface a user can use to interact with visual analytics module 210, such as, but not limited to, a graphical user interface, keyboard, mouse, touch screen, etc.

According to one example, depending on the analytical data that is to be displayed in the chart, how the data is provided, the device information (e.g., device size, display size, etc.), and the application information (e.g., the space on application where the graph is to be displayed) chart manager 214 can determine which design can fit better for the chart. Additionally or alternatively, a developer (using for example the user interface) can provide parameters and information to chart manager 214 such that chart manager 214 could determine the optimum design for the chart. For example, based on the information that chart manager 214 retrieves from local data store 230 and/or a user, chart manager 214 can determine whether the chart shows only the trend of the data and/or any data points. Chart manager 214 can determine if data points are displayed, how many of the data points are to be displayed. Chart manager 214 can determine the color to display the chart, the data points, and/or any title, description, or labels. Chart manager 214 can determine whether any focus points are to be displayed and can determine the colors to be used to display them. Chart manager 214 can determine whether a threshold is to be displayed, whether the areas between the graph and a threshold are to be displayed, and what color to be used to display them. Chart manager 214 can determine whether any title, descriptions, and/or labels to be displayed and can determine the size and/or font of the chart's title, descriptions, and/or labels. In one example, the descriptions and/or labels associated with the chart can include dates associated with the data displayed by the chart. Chart manager 214 can also determine the color of the background of the chart based on the received and retrieved information. Chart manager 214 can also determine whether one or more charts are to be displayed. Depending on the number of the charts to be displayed and the data retrieved from local data store 230 and/or a user, chart manager 214 is configured to determine a respective design for each of the charts to be displayed.

Chart manager 214 is configured to make these determinations dynamically based on the information it retrieves. In other words, the charts generated and displayed by chart generator 212 and chart manager 214 are responsive to different information and parameters provided by local data sore 230 and/or a user. Additionally or alternatively, the displayed charts can be manually scaled by a user. Visual analytics module 210, through user interface 220, can receive information when a user manually change, for example, the size of a chart. Based on the information received from user's manipulation of the chart and also information retrieved from local data store 230, chart manager 214, can determine which design can fit better for the chart (as discussed above) in view of user's requested manipulation of the chart.

In some embodiments, in determining the optimum design, the chart manager 214 determines (and if needed updates) the properties associated with the determined design. For example, chart manager 214 sets a property of the design to show or hide the data points. Chart manager 214 can set a property of the design on how many of the data points are to be displayed. Chart manager 214 can set a property of the design regarding the color to display the chart, the data points, and/or any title, description, or labels. Chart manager 214 can set a property of the design to show or hide focus points and their colors. Chart manager 214 can determine set a property of the design to show or hide a threshold, the areas between the graph and a threshold, and the color(s) to be used. Chart manager 214 can set a property of the design on the size and/or font of the chart's title, descriptions, and/or labels. After determining the optimum design and setting the properties, chart generator 212 can use the properties to display the chart on the display of the devices.

According to some embodiments, chart manager 214 can include a dimensions controller (not shown), a measurement controller (not shown), and a mapping controller (not shown). In one example, the dimensions controller can be able to determine information associated with the x-axis and y-axis of the chart to be displayed based on information retrieved from local data store. According to this example, the measurement controller can retrieve the analytical data from local data store 230, and in combination with the mapping controller and the dimensions controller, can map the analytical data to the x-y axes. Although these functions are described in accordance with the dimensions, measurement, and mapping controllers, it is noted that these functions can be performed by one or more of these controllers and/or by chart manager 214.

Additionally or alternatively, chart information 234, application information 236, and/or device information 238 can include chart design objectives and parameters. Chart manager 214 is configured to retrieve these chart design objectives and parameters and apply them when chart manager 214 determines the chart design.

According to some embodiments, chart manager 214 is configured to determine the final parameters of the chart even if there are some conflicting data. In other words, chart manager 214 is configured to resolve potential conflicts between retrieved and/or received information based on other retrieved and/or received parameters. For example, assume that the chart information 234 indicates that one chart to display ten data points. Assume that application information 236 associated to that chart requires twenty data points. In one example, chart manager 214 is configured to determine whether the chart with twenty data points can be displayed depending on other data stored in local data store 230. If so, chart manager 214 displays the chart with twenty data points. If not, chart manager 214 can display the chart with no data points, according to one example. Alternatively, chart manager 214 can display the chart with ten data points.

Additionally, chart manager 214 is configured to dynamically adapt the chart that is displayed or is to be displayed in response to changes in information and/or parameters. For example, if the size of a device on which the chart is displayed changes, if the size of the screen on which the chart is displayed changes, the application on which the chart is displayed changes, and/or the chart's space on the application on which the chart is displayed changes, chart manager 214 is configured to dynamically adapt the chart based on these changes. This adaptation can include changing the size of the chart, changing the number of data points displayed, changing the number of focus points displayed, changing any displayed thresholds, changing any displayed areas, changing the size and/or font of the chart's title, descriptions, labels, and/or changing the color associated with one or more of the display, data points, focus points, thresholds, areas, labels, etc. According to some embodiments, chart manager 214 is configured to adapt the chart in response to the changes in information and/or parameters and according to design objectives stored in, for example, local data store 230.

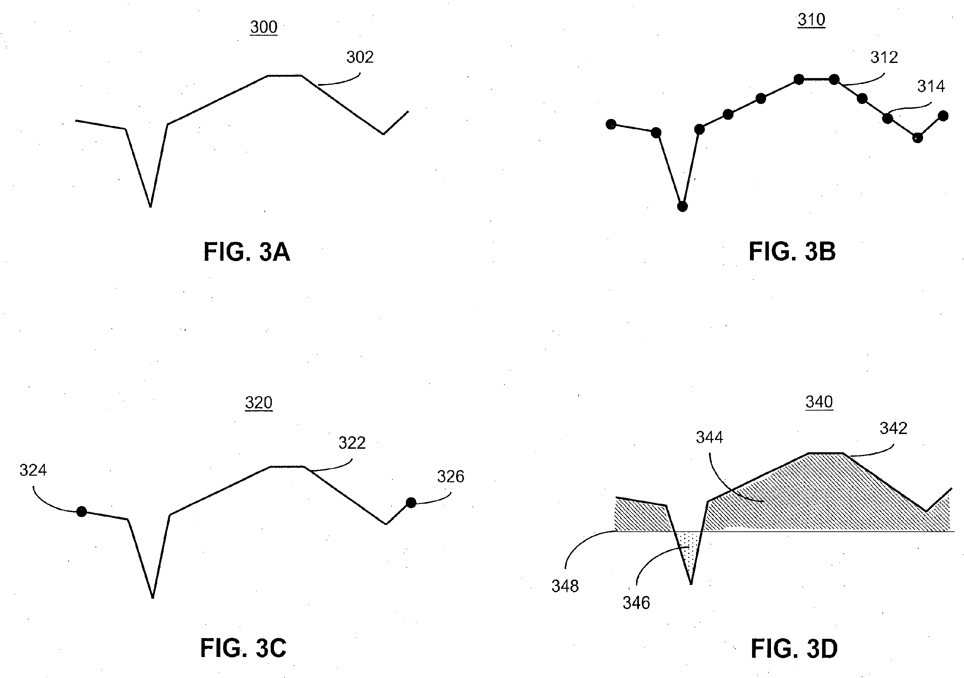

FIGs. 3A-3F illustrate exemplary charts, according to some embodiments. According to some examples, charts 300, 310, 320, 340, 360, and 370 of FIGs. 3A-3F can be generated and displayed using device 200 of FIG. 2. For example, chart manager 214 and chart generator 212 are configured to generate charts 300, 310, 320, 340, 360, 370, and/or any combination thereof, based on data stored in local data store 230 and/or data retrieved from a user. It is noted that these charts are depicted as examples and the embodiments of this disclosure are not limited to these examples and other charts (such as any combination of charts 300, 310, 320, 340, 360, and 370) can be generated and displayed.

FIG. 3A illustrates chart 300 that shows graph 302. Graph 302 illustrates the shape (e.g., the trend of the data that is displayed.) Graph 302 can be displayed using a color optimized by chart manager 214. In one example, color blue can be used as a neutral color to display graph 302. Alternatively, semantic color can be used for different parts of graph 302. For example, semantic colors can be used to illustrate positive and/or negative parts of graph 302. Additionally or alternatively, graph 302 can be used with a threshold line (e.g., zero axis). Chart manager 214 can use similar coloring schemes discussed above to display the graph with the threshold line.

FIG. 3B illustrates chart 310 that shows graph 312 and data points 314. According to one example, chart manager 214 is configured to determine the number of data points to be displayed, as discussed above. Graph 312 and data points 314 can be displayed using one or more colors optimized by chart manager 214. According to on example, graph 312 can be displayed in gray and data points can be displayed using semantic colors. For example, data points that are above a threshold (e.g., zero axis) can be displayed using color green and data points that are below the threshold can be displayed using color red. In addition to graph 312 and data points 314, chart 310 can also display areas beneath and/or above graph 312 (e.g., areas between graph 312 and a threshold.) Additionally, chart manager 214 can optimize the color used to display the areas.

FIG. 3C illustrates chart 320 that includes graph 322 and focus points 324 and 326. Focus points can include points on the chart with some significance to be conveyed. Exemplary chart 320 illustrates the focus points as the first and last data points of graph 322, however, the embodiments of this disclosure are not limited to this example and the focus point(s) can include any data point(s) on graph 320 (as another example, focus points can be maximum and minimum points on the graph). Graph 322 and focus points 324 and 326 can be displayed using one or more colors optimized by chart manager 214. According to on example, graph 322 can be displayed in gray and focus points can be displayed using semantic colors. For example, focus points that are above a threshold (e.g., zero axis) can be displayed using color green and focus points that are below the threshold can be displayed using color red. In addition to graph 322 and focus points 324 and 326, chart 320 can also display areas beneath and/or above graph 322. Additionally, chart manager 214 can optimize the color used to display the areas.

As one exemplary implementation, focus points and areas are displayed using neutral colors (e.g., blue.) As another exemplary implementation, focus points are displayed using neutral colors (e.g., blue) but the areas are displayed using semantic colors (e.g., green for area(s) above a threshold and red for area(s) under the threshold.) As another exemplary implementation, focus points are displayed using semantic colors (e.g., green for a "good" value of the focus point(s) and red for a "bad" value of the focus point(s).) In this example, the areas are displayed using neutral color (e.g., blue, grey.) As another exemplary implementation, both focus points and the areas are displayed using semantic colors.

FIG. 3D illustrates chart 340 that includes graph 342 and areas 344 and 346. In one example, areas 344 and 346 are displayed with respect to threshold 348 and graph 342. In other words, area 344 is the area under graph 342 which is above threshold 348. And area 346 is the area between threshold 348 and graph 342, where area 346 is under threshold 348. In some examples threshold 348 can be displayed. In another examples, threshold 348 is not explicitly displayed, however, areas 344 and 346 implicitly show the threshold. Graph 342, any threshold 348, and/or areas 344 and 346 can be displayed using one or more colors optimized by chart manager 214. According to on example, graph 342 and areas 344 and 346 can be displayed using neutral color (e.g., blue, grey). According to on example, graph 342 can be displayed in neutral color (e.g., blue, gray) and areas can be displayed using semantic colors. For example, areas that are above a threshold (e.g., zero axis) can be displayed using color green and areas that are below the threshold can be displayed using color red. According to another example, graph 342 can be displayed in one color and areas can be displayed using a different color than the graph but area 344 would have same color as area 346. In addition to graph 342 and areas 344 and 346, chart 340 can also display data point(s) and/or focus point(s). Additionally, chart manager 214 can optimize the color used to display the data point(s) and/or focus point(s).

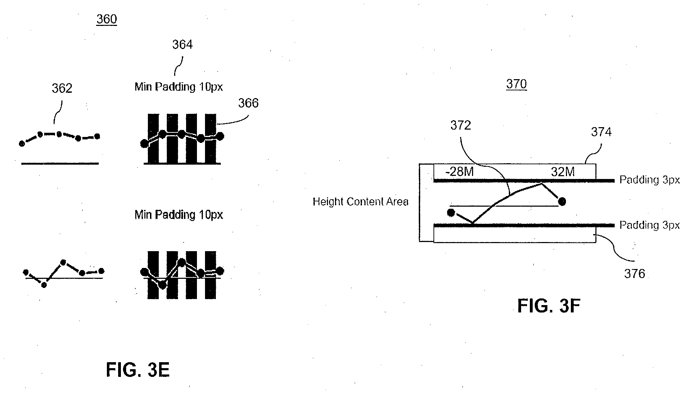

FIG. 3E illustrates chart 360 that shows graphs 362 and 364. Graph 362 illustrates the shape and also data points. Graph 364 includes paddings 366 in addition to the shape and the data points. In one example, paddings 366 are displayed between the data points. Graphs 362 and 364 (and paddings 366) can be displayed using a color optimized by chart manager 214, as discussed above. The size of paddings 366 (their height and/or width) can be optimized by chart manager 214 based on data retrieved and/or received from local data store 230 and/or a user.

FIG. 3F illustrates chart 370 that shows graph 372. Graph 372 illustrates the shape and also two focus points. Graph 372 includes paddings 374 and 376 in addition to the shape and the focus points. In some embodiments paddings 374 and 376 can be used to illustrate the height content area of the graph 372. Additionally, paddings 374 and 376 can include titles, labels, and/or descriptions associated with the graph, data points, and/or focus points shown on the graph. Graph 372 and paddings 374 and 376 can be displayed using a color optimized by chart manager 214, as discussed above. The size of paddings 374 and 376 (their height and/or width) can be optimized by chart manager 214 based on data retrieved and/or received from local data store 230 and/or a user.

Although not shown, charts 300, 310, 320, 340, 360, and 370 can also include labels that describe the chart. For example, the labels can include labels to show what the x-axis and y-axis represent. Additionally or alternatively, the labels can be associated with the first data point and the last data point on the chart. According to one example, the labels can take the same color as any data point, focus point, the graph, and/or any areas. Additionally or alternatively, the color for labels can be a fixed color irrespective of the color of any data point, focus point, the graph, and/or any areas. In one implementation, if the first and last data points on the chart are focus points, the labels can take the same color as their respective point. In another implementation, if one of the first and last data points of the chart is a focus point, the label associated with that focus point can take the color of the focus point. The label associated with the other point can either take the same color or take a different color.

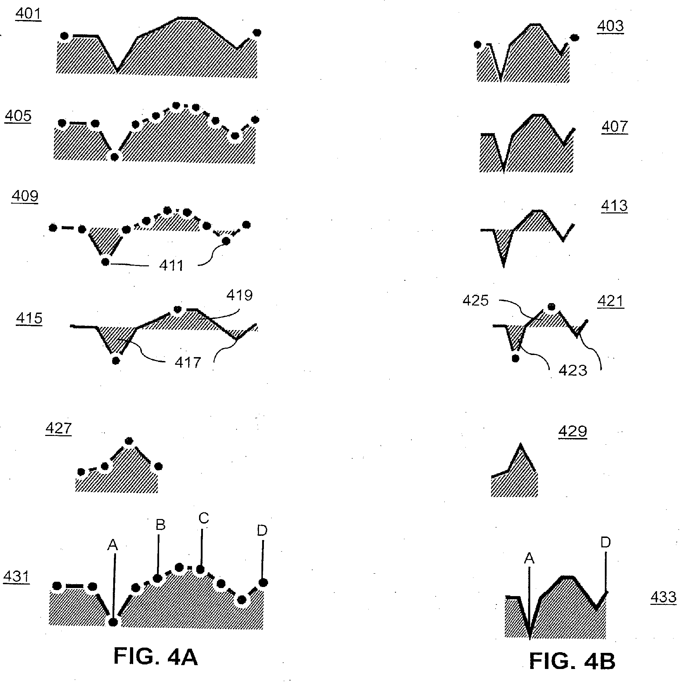

FIGs. 4A and 4B illustrate exemplary charts responsive to changes in parameters, according to some embodiments. According to this example, FIG. 4A illustrates charts 401, 405, 409, 415, 427, and 431 before any changes are made to the parameters that were used to generate and display these charts. In one example, charts 401, 405, 409, 415, and 427 display all data points, focus point(s), or a combination thereof. FIG. 4B illustrates charts 403, 407, 413, 421, 429, and 433 after one or more of the parameters that were used to generate and display these charts has changed. In one example, charts 403, 407, 413, 421, 429, and 431 display no data points or only focus point(s).

In one example, chart 401 includes two focus points. Focus points can include first and/or last data points, data points with highest and/or lowest value, and/or any other data point with some significance based on application, data, etc. Chart 403 illustrates a chart after one or more of the parameters that were used to generate and display chart 401 has changed. In one example, the change can include, but is not limited to, decreasing the width of chart 401, decreasing height of chart 401, etc. When the one or more parameters are changed, chart manager 214 alone or in combination with chart generator 212 is configured to re-evaluate chart 401, adapt the chart to the change parameter(s), and display the adapted chart 403. In one example, chart manager 214 alone or in combination with chart generator 212 is configured to determine whether data points are to be displayed in the adapted chart, whether focus point(s) are to be displayed in the adapted chart, whether the colors need to be changed, etc. In the example of charts 401 and 403, chart manager 214 alone or in combination with chart generator 212 has decreased the width of the chart without changes in the focus points.

In the example of charts 405 and 407, chart manager 214 alone or in combination with chart generator 212 has decreased the width of chart 405 and also has determined to remove the data points. In one example, chart manager 214 can determine to eliminate data points for chart 407 and/or to display only focused. This determination can be based on density of points per area (e.g., the number of data points compared to the size of the area for the chart.) Continuing with this example, local data store 230 can store focus points for chart 405 in addition to its data points. When one or more of the parameters that were used to generate and display chart 405 has changed, chart manager 214 can determine based on, for example, the density of points per area, whether chart 407 will have data points, it will have only focus points, or it will have no data/focus points.

Example of charts 409 and 413 is similar to example of charts 405 and 407. In the example of chart 409, data points 411 can be displayed in color red to illustrate that these data points are below a threshold. Other data points of chart 409 can be displayed in green to show that these data points are above the threshold. When chart manager 214 alone or in combination with chart generator 212 generates the new chart 413 in response to changes in the parameters, chart manager 214 alone or in combination with chart generator 212 decided that data points are removed. In one example, chart manager 214 alone or in combination with chart generator 212 can generate chart 413 such that areas that correspond to areas above data points 411 are in red (to follow the color of data points 411) and the other areas are displayed in green.

In another example, chart 415 includes focus points, areas 417 in red, and area 419 in green. When the parameters are changed, chart manager 214 alone or in combination with chart generator 212 is configured to generate an adapted chart 421. In this example, chart 421 is decreased in width with respect to chart 415. However, chart 421 still includes the focus points and the areas 423 and 425 that correspond to areas 417 and 419 of chart 415. The example of charts 427 and 429 is similar to charts 405 and 407 discussed above.

In the example of chart 431, chart manager 214 alone or in combination with chart generator 212 has decreased the width of chart 431 and also has determined to remove the data points. In addition, chart 431 includes indicators A, B, C, and D that point to respective data points. In chart 433, in addition to removing the data points, chart manager 214 alone or in combination with chart generator 212 has determined to remove two of the indicators (B and C) and keep the other indicators (A and D). This determination can, for example, be based on density of points per area (e.g., the number of data points compared to the size of the area for the chart), density of the indicators, etc. Continuing with this example, local data store 230 can store the indicators for chart 431 in addition to its data points. When one or more of the parameters that were used to generate and display chart 431 has changed, chart manager 214 can determine based on, for example, the density of points per area and/or density of the indicators per area, whether chart 433 will have any indicators and/or how many.

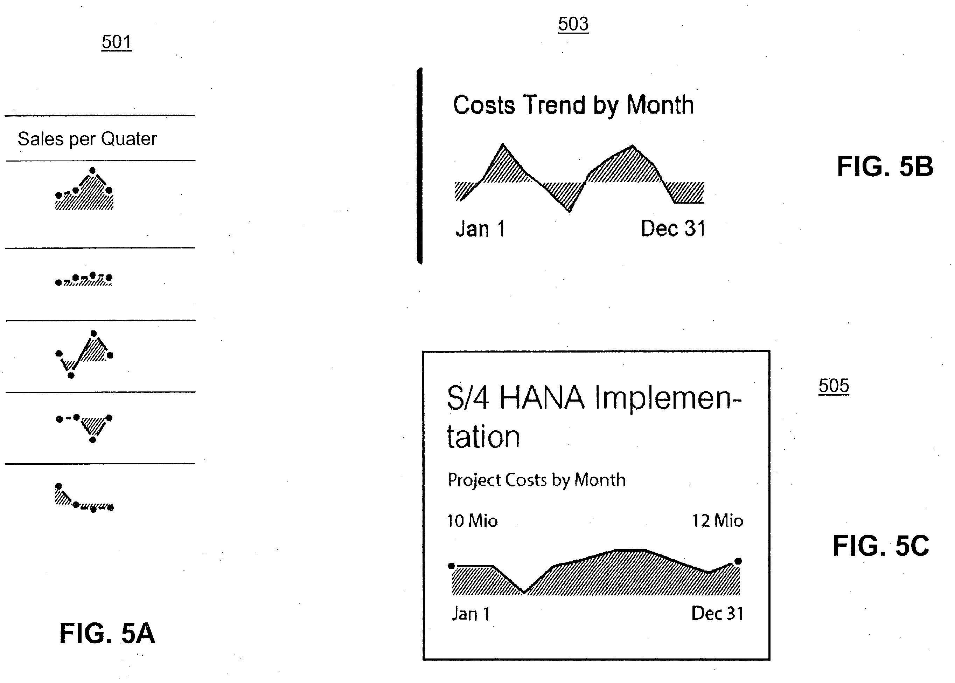

FIGs. 5A-5E illustrate exemplary charts responsive to different parameters, according to some embodiments. In one example, chart manager 214 alone or in combination with chart generator 212 is configured to generate charts 501, 503, 505, 507, and 509 based on information and parameters stored in local data store 230 and/or information and parameters received from a user.

FIG. 5A illustrates an exemplary chart 501 that can be displayed in, for example, a table, a list report, a snapping header, a filter bar, and/or list elements. According to this example, chart manager 214 is configured to retrieve the information regarding the table, the list report, the snapping header, the filter bar, and/or the list elements, for example, application information 234, chart information 236, and/or device information 238 and to generate parameters for chart 501 according to the retrieved information. Chart generator 212 is configured to generate chart 501 in accordance with information from chart manager 214. In some examples, multiple charts can be displayed in the same table, list report, snapping header, filter bar, and/or list elements. In one example, same vertical scale can be used for each graph in chart 501 for every row of the table and/or the list report.

FIG. 5B illustrates an exemplary chart 503 that can be displayed in, for example, object page header, chart container, notifications, and/or searches. According to this example, chart manager 214 is configured to retrieve the information regarding the object page header, chart container, notifications, and/or searches, for example, application information 234, chart information 236, and/or device information 238 and to generate parameters for chart 503 according to the retrieved information. Chart generator 212 is configured to generate chart 503 in accordance with information from chart manager 214. In one example, full height for the chart can be used and/or same or different vertical scales can be used for chart 503.

FIG. 5C illustrates an exemplary chart 505 that can be displayed in, for example, title(s), Launchpad, catalog, searches. According to this example, chart manager 214 is configured to retrieve the information regarding the title(s), Launchpad, catalog, searches from, for example, application information 234, chart information 236, and/or device information 238 and to generate parameters for chart 505 according to the retrieved information. Chart generator 212 is configured to generate chart 505 in accordance with information from chart manager 214. In one example, full height for the chart can be used and/or same or different vertical scales can be used for chart 505 on different titles.

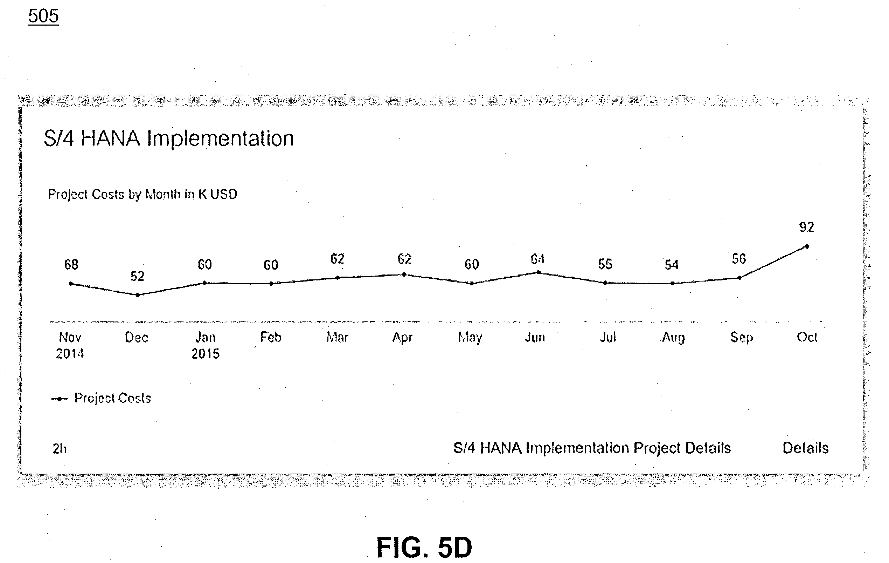

FIG. 5D illustrates an exemplary chart 507 that can be displayed in, for example, an overview page. According to this example, chart manager 214 is configured to retrieve the information regarding the overview page from, for example, application information 234, chart information 236, and/or device information 238 and to generate parameters for chart 507 according to the retrieved information. Chart generator 212 is configured to generate chart 507 in accordance with information from chart manager 214.

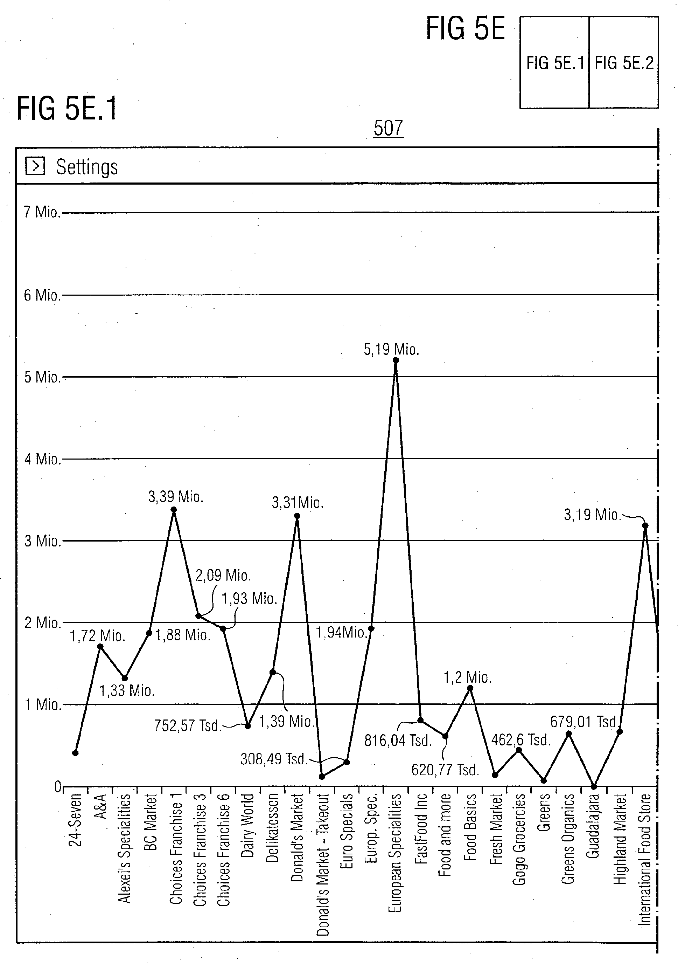

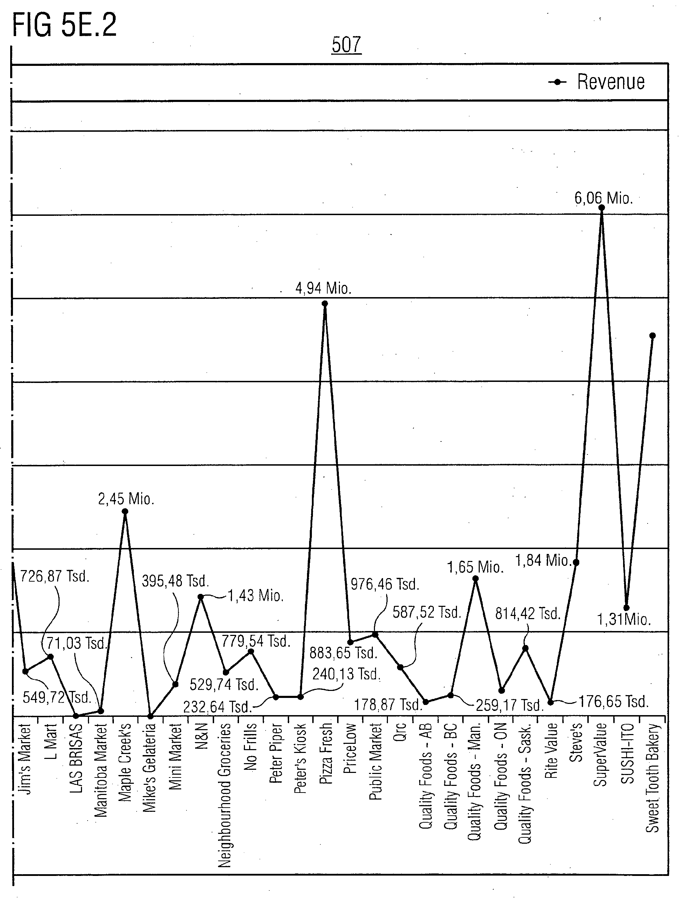

FIG. 5E illustrates an exemplary chart 509 that can be displayed in, for example, a chart detail full screen. According to this example, chart manager 214 is configured to retrieve the information regarding the chart detail full screen from, for example, application information 234, chart information 236, and/or device information 238 and to generate parameters for chart 509 according to the retrieved information. Chart generator 212 is configured to generate chart 509 in accordance with information from chart manager 214.

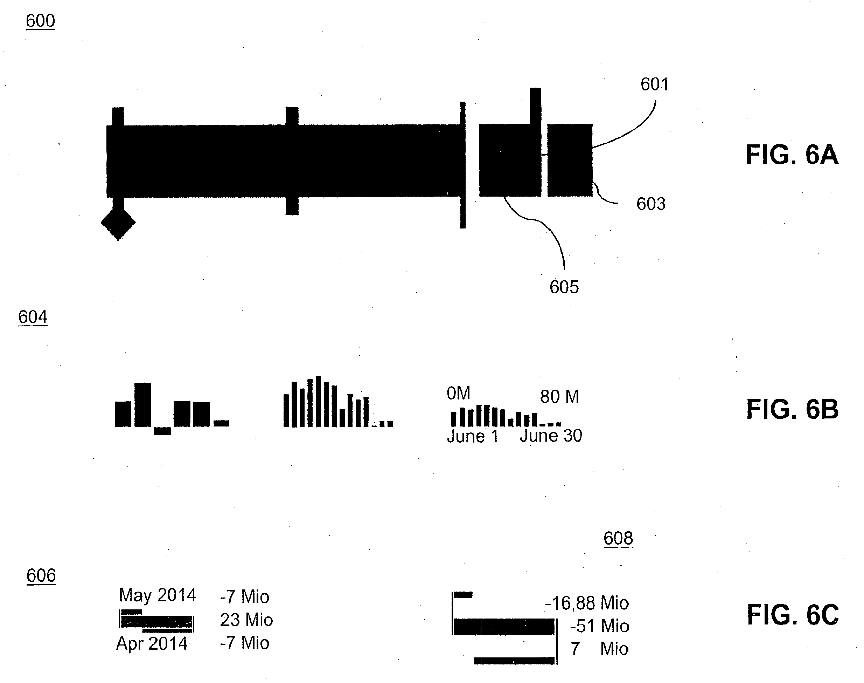

It is noted that although the examples provided above are discussed with respect to line charts, the embodiments of this disclosure can include any kind of charts and graphs such as, but not limited to, area charts, bullet charts, column charts, ball chart, delta charts, radial charts, etc. FIGs. 6A-6F illustrate other exemplary charts, according to some embodiments. In one example, chart manager 214 alone or in combination with chart generator 212 is configured to generate charts 600, 604, 606, 608, 610, 612, and 614 of FIGs. 6A-6F.

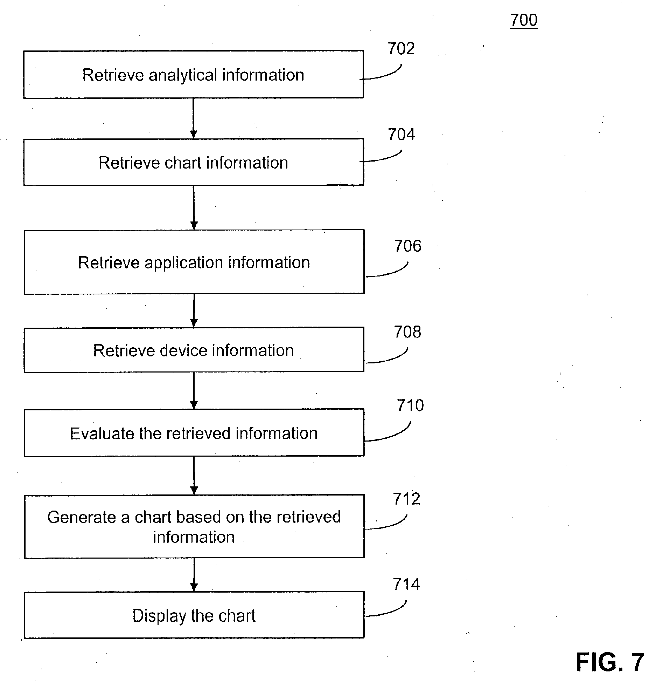

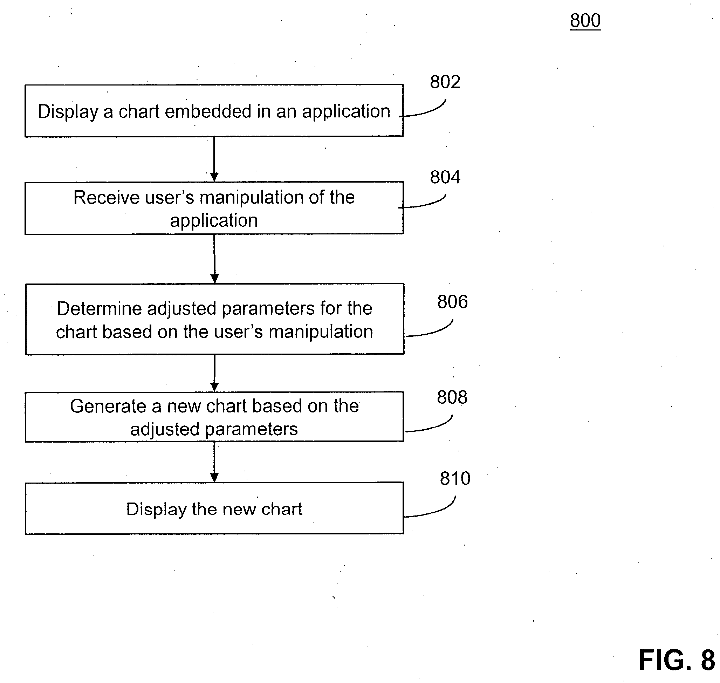

FIG. 6A illustrates a bullet chart 600. In one example, bullet chart 600 can include a micro bullet chart. According to some embodiments, chart manager 214 and chart generator 212 are configured to generate and adapt bullet chart 600 in the similar manner discussed above with respect to FIGs. 1, 2, 3A-3D, 4A, 4B, and 5A-5E and in the similar manner discussed below with respect to FIGs. 7 and 8. In one example, bullet chart 600 includes a padding 601 added between actual/forecast value 602 and background 603.

FIG. 6B illustrates column charts 604. In one example, column charts 604 can include micro column charts. According to some embodiments, chart manager 214 and chart generator 212 are configured to generate and adapt column charts 604 in the similar manner discussed above with respect to FIGs. 1, 2, 3A-3D, 4A, 4B, and 5A-5E and in the similar manner discussed below with respect to FIGs. 7 and 8.

FIG. 6C illustrates delta charts 606 and 608. In one example, delta charts 606 and 608 can include micro delta charts. According to some embodiments, chart manager 214 and chart generator 212 are configured to generate and adapt delta charts 606 and 608 in the similar manner discussed above with respect to FIGs. 1, 2, 3A-3D, 4A, 4B, and 5A-5E and in the similar manner discussed below with respect to FIGs. 7 and 8. In one example, delta charts 606 and 608 can include a hatched lines pattern used for the delta value. Alternatively, delta charts 606 and 608 can include a solid color used for the delta value. Additionally or alternatively, the bottom and top bars and/or vertical lines can also have solid colors, according to some embodiments.

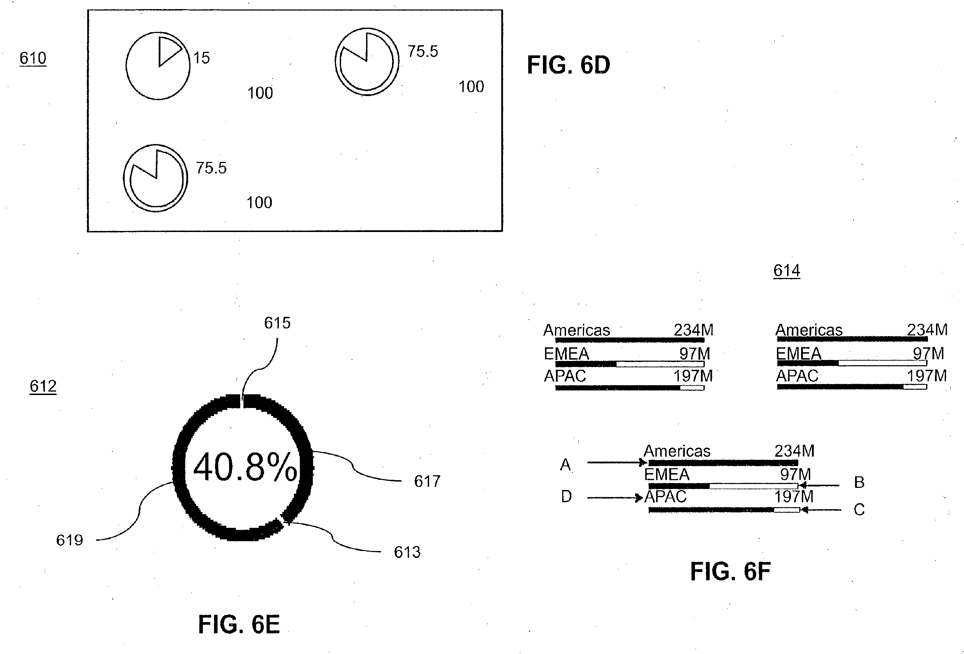

FIG. 6D illustrates ball charts 610. In one example, ball charts 610 can include Harvey micro ball charts. According to some embodiments, chart manager 214 and chart generator 212 are configured to generate and adapt ball charts 610 in the similar manner discussed above with respect to FIGs. 1, 2, 3A-3D, 4A, 4B, and 5A-5E and in the similar manner discussed below with respect to FIGs. 7 and 8.

FIG. 6E illustrates radial chart 612. In one example, radial chart 612 can include micro radial chart. According to some embodiments, chart manager 214 and chart generator 212 are configured to generate and adapt radial chart 612 in the similar manner discussed above with respect to FIGs. 1, 2, 3A-3D, 4A, 4B, and 5A-5E and in the similar manner discussed below with respect to FIGs. 7 and 8. In one example, radial chart 612 includes padding 613 and 615 added between actual/forecast value 617 and background 619.

FIG. 6F illustrates comparison charts 614. In one example, comparison charts 614 can include micro comparison charts. According to some embodiments, chart manager 214 and chart generator 212 are configured to generate and adapt comparison charts 614 in the similar manner discussed above with respect to FIGs. 1, 2, 3A-3D, 4A, 4B, and 5A-5E and in the similar manner discussed below with respect to FIGs. 7 and 8.

In addition to charts discussed above, another chart that can be generated by chart manager 214 and chart generator 212 is an area chart. An area chart can include one or more areas and one or more lines. In one example, the lines can include dotted and/or solid lines, which can change depending on whether a threshold is displayed or not. According to one example, chart manager 214 and chart generator 212 are configured to generate and adapt area charts based on information stored in local data store 230 and/or information received from a user.

Chart manager 214 and chart generator 212 are configured to generate and display charts 600, 604, 606, 608, 610, 612, and 614 based on information stored in local data store 230 and/or information received from a user. Further, chart manager 214 and chart generator 212 are configured to adapt these charts based on any changes to the parameters and information stored in local data store 230 and/or information received from a user. For example, chart manager 214 and chart generator 212 are configured to optimize the color(s) used for each chart and/or each segment of the chart based on the information stored in local data store 230 and/or information received from a user. According to one example, color for each part of each chart can be defined as color parameters such that the colors can be universally changed for one or more charts by re-defining the color parameters.

FIG. 7 is a flowchart for a method 700, according to some embodiments. Method 700 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 7, as will be understood by a person of ordinary skill in the art.

Method 700 shall be described with reference to FIGs. 1, 2, 3A-3D, 4A, 4B, 5A-5E, and 6A-6F. However, method 700 is not limited to these example embodiments.

Although not shown, method 700 can start with a request to create and render a chart. For example, visual analytics module 210 and more specifically, chart manager 214 can receive a request to create and render a chart. The request can be initiated by an application (including, but not limited to, for example, a web application) running on device 200 that desires to render the chart.

In 702, chart manager 214 retrieves analytical information from local data store 230. Analytical information includes information in analytical data 232, which as discussed above, can include the data that is to be visualized in a chart, expressions, and/or expression data.

In 704, chart manager 214 retrieves chart information from local data store 230. According to some example, chart information includes information in chart information 234, which as discussed above, can include information and one or more parameters associated with the chart to be visualized by device 200.

In 706, chart manager 214 retrieves application information from local data store 230. According to some example, application information includes information in application information 236, which as discussed above, can include information and one or more parameters associated with the application for which the chart is being displayed.

In 708, chart manager 214 retrieves device information from local data store 230. According to some example, device information includes information in device information 238, which as discussed above, can include information and one or more parameters associated with device 200. Additionally or alternatively, chart information 234, application information 236, and/or device information 238 can include chart design objectives. Chart manager 214 is configured to retrieve these chart design objectives. In some embodiments, chart manager 214 can retrieve data and information from a user through user interface 220.

In 710, chart manager 214 evaluates the retrieved information and determines a design for the chart based on the evaluation. In one embodiment, chart manager 214 evaluates the retrieved information (e.g., analytical data, the one or more parameters associated with the chart, the one or more parameters associated with the device, and/or the one or more parameters associated with the application) to determine a design for the chart. In some embodiments, the design of the chart can include at least one of a number of data points on the chart, a number of focus points on the chart, a size of the chart, a color of the data points, a color of the focus points, an area associated with the chart, and a color of the area.

For example, depending on the analytical data that is to be displayed in the chart, how the data is provided, the device information (e.g., device size, display size, etc.), and the application information (e.g., the space on application where the graph is to be displayed) chart manager 214 can determine which design can fit better for the chart. Additionally or alternatively, a developer (using for example the user interface) can provide parameters and information to chart manager 214 such that chart manager 214 could determine the optimum design for the chart. For example, based on the information that chart manager 214 retrieves from local data store 230 and/or a user, chart manager 214 can determine whether the chart shows only the trend of the data and/or any data points. Chart manager 214 can determine if data points are displayed, how many of the data points are displayed. Chart manager 214 can determine the color to display the chart, the data points, and/or any labels. Chart manager 214 can determine whether any focus points are to be displayed and can determine the colors to be used to display them. Chart manager 214 can determine whether a threshold is to be displayed, whether the areas under the graphs are to be displayed, and what color to be used to display them. Chart manager 214 can determine whether any title, descriptions, and/or labels to be displayed and can determine the size and/or font of the chart's title, descriptions, and/or labels. Chart manager 214 can also determine the color of the background of the chart based on the received and retrieved information. Chart manager 214 can also determine whether one or more charts are to be displayed. Depending on the number of the charts to be displayed and the data retrieved from local data store 230 and/or a user, chart manager 214 is configured to determine a respective design for each of the charts to be displayed. Chart manager 214 is configured to make these determinations dynamically based on the information it retrieves. In other words, the charts generated and displayed by chart generator 212 and chart manager 214 are responsive to different information and parameters provided by local data sore 230 and/or a user.

In one example, based on the evaluated information, chart manager 214 can determine the chart's parameters and can send these parameters to chart generator 212. In 712, chart generator 212 alone or in combination with chart manager 214 can generate the chart based on the determined chart's parameters. In 714, chart generator 212 alone or in combination with chart manager 214 renders the chart on, for example, a display of device 200.

FIG. 8 is a flowchart for a method 800 for adapting a chart based on user manipulation, according to some embodiments. Method 800 can be performed by processing logic that can comprise hardware (e.g., circuitry, dedicated logic, programmable logic, microcode, etc.), software (e.g., instructions executing on a processing device), or a combination thereof. It is to be appreciated that not all steps may be needed to perform the disclosure provided herein. Further, some of the steps may be performed simultaneously, or in a different order than shown in FIG. 8, as will be understood by a person of ordinary skill in the art.

Method 800 shall be described with reference to FIGs. 1, 2, 3A-3D, 4A, 4B, 5A-5E, and 6A-6F. However, method 800 is not limited to these example embodiments.

In 802, chart manager 214 alone or in combination with chart generator 212 renders a chart on a display of, for example, device 200. In this example, the chart is embedded in an application. However, it is noted that the embodiments of this disclosure and the embodiments of FIG. 8 are not limited to this example.

In 804, chart manager 214 receives information associated with user's manipulation of the application on which the chart is embedded. In one example, chart manager 214 can receive the information associated with the manipulation through user interface 220. According to one example, the user's manipulation can include changing the size of the application being displayed and/or changing the display size (e.g., connecting a mobile smart phone to a laptop). Additionally or alternatively, the user manipulation can include the user (e.g., a developer) changing parameters and/or information in local data store 230. It is noted that although this example is illustrated based on a user's manipulation of the application, this example encompasses any other method that can change parameters and/or information associated with the chart. For example, chart manager 214 can receive and/or retrieve any changes made to analytical data, the one or more parameters associated with the chart, the one or more parameters associated with the device, and/or the one or more parameters associated with the application.

In 806, chart manager 214 can dynamically determine adjusted parameters for the chart based on the retrieved information associated with the user manipulation. Additionally, chart manager 214 is configured to dynamically adjust the design of the chart when at least one of the analytical data, the one or more parameters associated with the chart, the one or more parameters associated with the device, and the one or more parameters associated with the application changes. In one example, chart manager 214 can send these adjusted parameters to chart generator 212.

In 808, chart generator 212 alone or in combination with chart manager 214 can generate the new (e.g., adjusted) chart based on the adjusted parameters. In 810, chart generator 212 alone or in combination with chart manager 214 renders the adjusted chart.

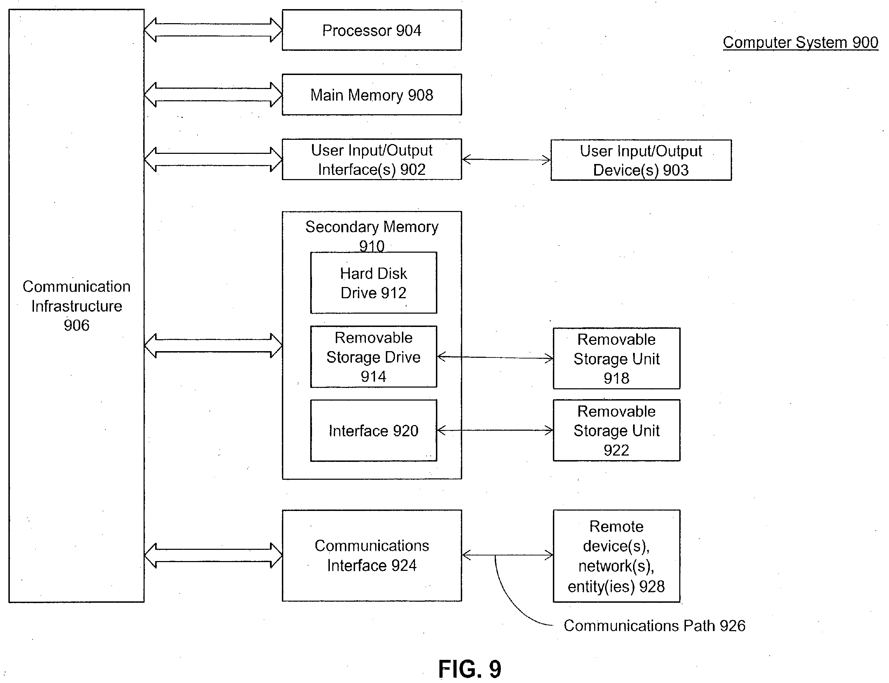

Various embodiments can be implemented, for example, using one or more computer systems, such as computer system 900 shown in FIG. 9. Computer system 900 can be used, for example, to implement method 700 of FIG. 7 and/or method 800 of FIG. 8. For example, computer system 900 can generate and adapt charts such as charts discussed with respect to FIGs. 1, 2, 3A-3D, 4A, 4B, 5A-5E, and 6A-6F, according to some embodiments. Computer system 900 can further calculate a sum over block(s) of data in the generated table data structure, according to some embodiments. Computer system 900 can be any computer capable of performing the functions described herein.

Computer system 900 can be any well-known computer capable of performing the functions described herein.

Computer system 900 includes one or more processors (also called central processing units, or CPUs), such as a processor 904. Processor 904 is connected to a communication infrastructure or bus 906.

One or more processors 904 may each be a graphics processing unit (GPU). In an embodiment, a GPU is a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 900 also includes user input/output device(s) 903, such as monitors, keyboards, pointing devices, etc., that communicate with communication infrastructure 906 through user input/output interface(s) 902.

Computer system 900 also includes a main or primary memory 908, such as random access memory (RAM). Main memory 908 may include one or more levels of cache. Main memory 908 has stored therein control logic (i.e., computer software) and/or data.

Computer system 900 may also include one or more secondary storage devices or memory 910. Secondary memory 910 may include, for example, a hard disk drive 912 and/or a removable storage device or drive 914. Removable storage drive 914 may be a floppy disk drive, a magnetic tape drive, a compact disk drive, an optical storage device, tape backup device, and/or any other storage device/drive.

Removable storage drive 914 may interact with a removable storage unit 918. Removable storage unit 918 includes a computer usable or readable storage device having stored thereon computer software (control logic) and/or data. Removable storage unit 918 may be a floppy disk, magnetic tape, compact disk, DVD, optical storage disk, and/ any other computer data storage device. Removable storage drive 914 reads from and/or writes to removable storage unit 918 in a well-known manner.

According to an exemplary embodiment, secondary memory 910 may include other means, instrumentalities or other approaches for allowing computer programs and/or other instructions and/or data to be accessed by computer system 900. Such means, instrumentalities or other approaches may include, for example, a removable storage unit 922 and an interface 920. Examples of the removable storage unit 922 and the interface 920 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 900 may further include a communication or network interface 924. Communication interface 924 enables computer system 900 to communicate and interact with any combination of remote devices, remote networks, remote entities, etc. (individually and collectively referenced by reference number 928). For example, communication interface 924 may allow computer system 900 to communicate with remote devices 928 over communications path 926, which may be wired and/or wireless, and which may include any combination of LANs, WANs, the Internet, etc. Control logic and/or data may be transmitted to and from computer system 900 via communication path 926.

In an embodiment, a tangible apparatus or article of manufacture comprising a tangible computer useable or readable medium having control logic (software) stored thereon is also referred to herein as a computer program product or program storage device. This includes, but is not limited to, computer system 900, main memory 908, secondary memory 910, and removable storage units 918 and 922, as well as tangible articles of manufacture embodying any combination of the foregoing. Such control logic, when executed by one or more data processing devices (such as computer system 900), causes such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 9. In particular, embodiments may operate with software, hardware, and/or operating system implementations other than those described herein.

It is to be appreciated that the Detailed Description section, and not the Summary and Abstract sections (if any), is intended to be used to interpret the claims. The Summary and Abstract sections (if any) may set forth one or more but not all exemplary embodiments of the disclosure as contemplated by the inventor(s), and thus, are not intended to limit the disclosure or the appended claims in any way.

While the disclosure has been described herein with reference to exemplary embodiments for exemplary fields and applications, it should be understood that the disclosure is not limited thereto. Other embodiments and modifications thereto are possible, and are within the scope and spirit of the disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. Also, alternative embodiments may perform functional blocks, steps, operations, methods, etc. using orderings different than those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein.

The breadth and scope of the disclosure should not be limited by any of the above-described exemplary embodiments, but should be defined only in accordance with the following claims and their equivalents.

## Claims

1. A computer implemented method, comprising:
evaluating, by at least one processor, data to be displayed on a chart, one or more parameters associated with the chart, and one or more parameters associated with a device on which the chart is to be displayed;
determining, by the at least one processor, a design for the chart based on the evaluating, wherein the design of the chart comprises at least one of a number of data points on the chart, a number of focus points on the chart, a size of the chart, a color of the data points, a color of the focus points, an area associated with the chart, and a color of the area;
generating, by the at least one processor, the chart based on the determined design; and
graphically displaying, by the at least one processor, the chart,
wherein at least one of the evaluating, determining, generating, and graphically displaying are performed by one or more computers.

2. The method of claim 1, further comprising:
adjusting the design, by the at least one processor, when the one or more parameters associated with the chart or the one or more parameters associated with the device changes, and, optionally, the method further comprising:
generating, by the at least one processor, the chart based on the adjusted design; and
graphically displaying, by the at least one processor, the chart based on the adjusted design on a display of the device.

3. The method of any one of the preceding claims, wherein the chart is embedded in an application.

4. The method of claim 3, further comprising:
retrieving, by the at least one processor, one or more parameters associated with the application.

5. The method of claim 4, further comprising:
receiving, by the at least one processor, information associated with a user's manipulation of the application; and
dynamically adjusting the design, by the at least one processor, based on the information associated with the user's manipulation.

6. The method of any one of the preceding claims, further comprising:
resolving, by the at least one processor, any conflict between the data to be displayed on the chart, the one or more parameters associated with the chart, and the one or more parameters associated with the device on which the chart is to be displayed, to determine the design.

7. The method of any one of the preceding claims, wherein the chart comprises at least one of a line chart, an area chart, a bullet chart, a column chart, a ball chart, a delta chart, and a radial chart.

8. A system, comprising:
a memory; and
at least one processor coupled to the memory and configured to:
evaluate data to be displayed on a chart, one or more parameters associated with the chart, and one or more parameters associated with a device on which the chart is to be displayed;
determine a design for the chart based on the evaluating, wherein the design of the chart comprises at least one of a number of data points on the chart, a number of focus points on the chart, a size of the chart, a color of the data points, a color of the focus points, an area associated with the chart, and a color of the area;
generate the chart based on the determined design; and
graphically display the chart.

9. The system of claim 8, the at least one processor further configured to:
adjust the design when the one or more parameters associated with the chart or the one or more parameters associated with the device changes, and optionally,
generate the chart based on the adjusted design; and
graphically display the chart based on the adjusted design on a display of the system.

10. The system of one of claims 8 or 9, wherein the chart is embedded in an application.

11. The system of claim 10, the at least one processor further configured to:
retrieve one or more parameters associated with the application.

12. The system of claim 11, wherein to dynamically adjust the design the at least one processor further configured to:
receive information associated with a user's manipulation of the application; and
dynamically adjust the design based on the information associated with the user's manipulation.

13. The system of any one of claims 8 to 12, the at least one processor further configured to:
resolve any conflict between the data to be displayed on the chart, the one or more parameters associated with the chart, and the one or more parameters associated with the device on which the chart is to be displayed, to determine the design.

14. The system of any one of claims 8 to 13, wherein the chart comprises at least one of a line chart, an area chart, a bullet chart, a column chart, a ball chart, a delta chart, and a radial chart.

15. A tangible computer-readable device having instructions stored thereon that, when executed by at least one computing device, causes the at least one computing device to perform the method according to any one of claims 1 to 7.
